# EUROPEAN PATENT SPECIFICATION

(11) **EP 1 215 174 B1**
(45) Date of publication and mention of the grant of the patent: **30.09.2009**
(21) Application number: 00954980.9
(22) Date of filing: 24.08.2000
(51) Int. Cl.: C01G 9/03, C09C 1/04

(54) **HIGHLY WHITE ZINC OXIDE FINE PARTICLES AND METHOD FOR PREPARATION THEREOF**
HOCHWEISSE ZINKOXIDTEILCHEN UND VERFAHREN ZU DESSEN HERSTELLUNG
FINES PARTICULES D'OXYDE DE ZINC TRES BLANCHES ET PROCEDE DE PREPARATION DE CES DERNIERES

(30) Priority: 25.08.1999 JP 23887399; 30.06.2000 US 215071 P
(43) Date of publication of application: 19.06.2002
(73) Proprietor: Showa Denko K.K., Tokyo 105-8518 (JP)
(72) Inventor: KOGOI, Hisao, Showa Denko K.K., Minato-ku, Tokyo 105-8518 (JP); TANAKA, Jun, Showa Titanium Co., Ltd., Toyama-shi, Toyama 931-8577 (JP); YAMAYA, Hayato, Showa Denko K.K., Minato-ku, Tokyo 105-8518 (JP)
(74) Representative: Strehl Schübel-Hopf & Partner
(86) International application number: PCT/JP2000/005696
(87) International publication number: WO 2001/014255

(56) References cited:
- JP-A- 4 349 118
- JP-A- 5 017 143
- JP-A- 6 144 833
- JP-A- 6 144 834
- US-A- 5 441 726
- US-A- 5 582 771

## Description

### TECHNICAL FIELD

The present invention relates to particulates, particularly ultrafine particulates of highly white zinc oxide, more particularly the one having a tetrapod- or needle-shaped particle configuration, which are useful as additives for cosmetics, pigments and paints. Furthermore, the present invention relates to particulates, particularly ultrafine particulates of highly white zinc oxide obtained by flowing zinc vapor, along with a carrier gas composed of an inert gas, into a reactor, simultaneously flowing an oxidizing gas containing oxygen and steam into the reactor to oxidize the zinc vapor, and quickly cooling it, and to a production process thereof. Here, although ultrafine particulates in general are not strictly defined with respect to the primary particle size, fine particles having a primary particle size of about 0.1 µm or less are usually called ultrafine particles (particulates).

### BACKGROUND ART

Zinc oxide has been used as a medicine, a vulcanization accelerator for rubbers, a catalyst, a material for electronic components, a paint, a pigment, a cosmetic, a reinforcing material for plastics or rubbers, etc. Generally, the production processes for zinc oxide include a liquid phase process and a vapor phase process. The liquid phase process produces zinc hydroxide by synthesize and precipitates zinc formate, zinc hydroxide, basic zinc carbonate or the like in a liquid phase, filtering and washing the precipitates, and thermally decomposing them. The liquid phase process can readily produce fine primary particles. However, since it includes the steps of liquid phase synthesis, filtering, drying, etc., the zinc oxide obtained thereby must inevitably be an aggregate. In practical use, zinc oxide must be slurried together with liquids as in the case of paints, pigments, cosmetics, etc., incorporated in or compounded with other solids as in the case of reinforcing materials for rubbers and plastics, or mixed with other powders as in the case of materials for electronic components. In these cases, the existence of aggregated particles considerably deteriorates the uniformity in composition or dispersibility. It is well known in the art that finer particles have increased uniformity and dispersibility. Furthermore, use of ultrafine particles can impart additional properties such as increased ultraviolet-shielding-ability while maintaining the transparency of the material containing them as in the case where they are used in cosmetics. Therefore, pulverization treatment must be performed in order to break the aggregates or obtain fine particles. However, this causes disadvantages upon use in that contamination from the vessel, pulverizing balls, etc. occurs and that the particle size distribution becomes broader. In addition, there is a limitation in making the particles finer so that ultrafine particles cannot be obtained. That is, it is very difficult to obtain ultrafine particulates of highly white zinc oxide by a liquid process.

On the other hand, there is a vapor process as a process for producing zinc oxide powders. The vapor process provides zinc oxide by oxidizing zinc vapor as is well known in the so-called the French process and the U.S. process (See Bull. Chem. Soc. Japan, 837-842, 1984). The U.S. process is a process which includes oxidization of zinc vapor containing a reducing gas and may happen to produce needle-shaped zinc oxide. However, this process has a problem in purity since lead, cadmium, etc. tend to be contained in the product. Furthermore, conglomerate particles tend to be mixed in the product. On the other hand, the French process is a process which produces zinc oxide by oxidizing zinc vapor. It gives zinc oxide in a higher purity than the U.S. process but the zinc oxide is comprised by conglomerate particles and it is difficult to obtain products made simply of needle-shaped particles.

As a method for obtaining tetrapod- or needle-shaped zinc oxide, JP-A-3-150299 discloses a production process of zinc oxide whiskers by setting the temperature of the atmosphere in a heat-resistant vessel to a predetermined temperature and slowly cooling the obtained zinc vapor to promote the growth of needle-like crystals. However, the zinc oxide obtained by the process is comprised by relatively large tetrapod-shaped particles having a particle diameter of about 5 µm to about 80 µm. There is another problem that the above process is a production process of a batch-type so that it is unsuitable for mass production. Furthermore, JP-A-4-349118 discloses a method for obtaining needle-shaped zinc oxide by adding zinc vapor stepwise along its flow path. However, the particles obtained by the process have a particle size as large as 1 µm to 20 µm.

The method for obtaining fine tetrapod-shaped zinc oxide includes a process for obtaining needle-shaped zinc oxide by oxidizing and combusting zinc vapor and cooling the product at a rate of 480°C/sec or more as disclosed in JP-B-60-5529. Even in this case, however, the fine particles, at best, have an average particle size of about 0.2 µm to about 1 µm. To make them finer, it could be considered to increase the cooling rate to an extremely high rate. However, this measure results in insufficient oxidation of zinc vapor. As a result, unreacted zinc contaminates the product to color it gray so that it is very difficult to obtain ultrafine particulates of highly white zinc oxide. Furthermore, JP-A-7-118133 discloses the production method for ultrafine particulates of zinc oxide having a BET specific surface area of 70 m²/g to 110 m²/g, which is measured by BET one point method. Such extremely ultrafine particles when in use for cosmetics will have decreased ultraviolet-shielding-ability in spite of an increase in the transparency of zinc oxide.

US 5,441,726 discloses a sunscreen composition comprising zinc oxide particles having a rod shape with a length of less than 300 nm and a diameter of less than 100 nm.

### SUMMARY OF THE INVENTION

An object of the present invention is to provide fine particles, especially ultrafine particulates (hereinafter "ultrafine particulates" are also referred to simply as "fine particles") of highly white (very white) zinc oxide useful as an additive to cosmetics, pigments, paints, etc., particularly the one having a tetrapod- or needle-shaped particle configuration.

Another object of the present invention is to provide a process of producing fine particulates of highly white zinc oxide in a high purity and in a high yield, the process being useful in industry. Particularly, an object of the present invention is to provide fine particulates of highly white zinc oxide which is transparent and excellent in its ultra-violet shielding ability and a production process thereof.

With view to obviating the above problems, the present inventors have made extensive investigations. As a result, they have found that fine particulates of highly white zinc oxide can be obtained that have a specified particle diameter within which the ultraviolet-shielding-ability is high, i.e., an average particle diameter of 15 nm to 55 nm reduced from the specific surface area as measured by the BET-one point method (JIS R1626) and that has an L value of 90 or more as measured by a Hunter-type color-difference meter. Also, they have found that for this purpose, the following two conditions must be met simultaneously: (1) zinc vapor is completely oxidized in a short time and (2) the end point of the oxidation reaction of zinc vapor is determined and the reaction is terminated immediately after the completion of oxidization in order to avoid the collision and fusion of generated zinc oxide particles. The present invention has been achieved based on the above discoveries.

That is, the present invention resides in fine particulates of highly white zinc oxide having an average particle diameter of 15 nm to 55 nm reduced from the specific surface area as measured by the BET-one point method and that have an L value of 90 or more as measured by a Hunter-type color-difference meter, preferably the one having a tetrapod- or needle-shaped particle configuration, and a process for producing fine particulates of highly white zinc oxide characterized by quick and complete oxidation of zinc vapor by an oxidizing gas and inhibition of the growth and aggregation of particles.

To obtain fine particulates of zinc oxide having an L value of 90 or more as measured by a Hunter-type color-difference meter, it is important to oxidize zinc vapor with an oxidizing gas quickly and completely. To this end, it is found to be very effective to vaporize zinc in a vaporizer and superheat the resulting gas by a heater provided downstream the vaporizer and it is also found to be effective to use a dense silicon carbide ceramic as a material of the heater. After the vaporization of zinc, introduction of the raw material gas into the heater made of a silicon carbide ceramic enables the temperature of the raw material gas upon its discharge into the reactor to efficiently reach a high temperature that has never been reached conventionally, i.e., as high as 950°C or more. Also, a heater made of the same material can be used for the oxidizing gas to sufficiently heat it so that a temperature of 900°C or more can be achieved at a nozzle for discharging the gas into the reactor. In addition, it has been found that, by selecting the composition of the oxidizing gas in a specified range, the raw material gas, heated as described above, can be oxidized very uniformly and quickly. The new knowledge on the raw material gas and oxidizing gas has led to very quick and complete oxidation of zinc vapor and as a result, it has been found that fine particulates of highly white zinc oxide can thus be obtained. By enabling such a quick oxidation of zinc vapor, no coloration of product occurs in spite of a decreased length of the reaction part and it has been successful in obtaining fine particulates of highly white zinc oxide having an average particle diameter of 15 nm to 55 nm reduced from the specific surface area as measured by the BET-one point method and that has an L value of 90 or more as measured by a Hunter-type color-difference meter, preferably the one having a tetrapod- or needle-shaped particle configuration.

The above and other objects, effects, features and advantages of the present invention will become more apparent from the following description of the preferred embodiments with reference to the attached drawings.

### BRIEF DESCRIPTION OF THE ATTACHED DRAWING

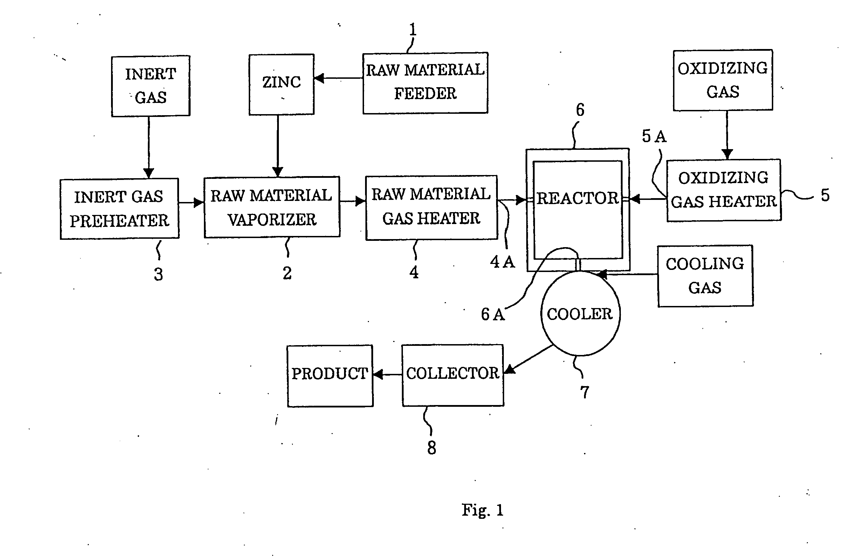

Fig. 1 is a flow sheet illustrating an example of the arrangement of apparatus used advantageously in producing fine particulates of highly white zinc oxide according to the present invention.

### BEST MODE OF CARRYING THE INVENTION

Hereinafter, the present invention will be described in detail with reference to the attached drawing.

Fig. 1 is a flow sheet illustrating an example of the arrangement of an apparatus used advantageously in producing fine particulates of highly white zinc oxide according to the present invention. The arrangement of the apparatus includes a raw material (zinc) feeder 1, a raw material (zinc) vaporizer 2, an inert gas preheater 3, a raw material (zinc) gas heater 4, a nozzle 4A of the raw material gas heater, an oxidizing gas heater 5, a nozzle 5A of the oxidizing gas heater, a reactor 6, an outlet 6A of the reactor, a cooler 7, and a collector 8 for collecting a product.

Metallic zinc (Zn) as a raw material is fed from the raw material feeder 1 and fed to the raw material vaporizer 2. The shape of zinc fed to the vaporizer 2 may be either powder or wire. It is possible to feed an inert gas along with metallic zinc as a raw material to the raw material vaporizer 2. The inert gas serves as a carrier gas for zinc vapor or as a shield gas for shielding the raw material when it is introduced. The inert gas includes nitrogen, helium, argon, etc. However, it is not limited thereto. It is desirable that the inert gas be heated in advance before it can be introduced into the raw material vaporizer 2. In this case, the inert gas is preheated to a temperature of 500°C to 1,000°C, for example, by the inert gas preheater 3 and then fed to the raw material vaporizer 2. The concentration of the inert gas to be introduced into the raw material vaporizer 2 is preferably such that the ratio of the number of moles of Zn to the total number of moles of Zn + inert gas, i.e., Zn/(Zn + inert gas), is in the range of 3% by mole to 70% by mole. This concentration is closely related to the productivity and influences the size of the resulting zinc oxide particles.

Then, zinc vapor containing the inert gas, i.e., raw material gas is introduced from the raw material vaporizer 2 to the raw material gas heater 4. The raw material vaporizer 2 and the raw material gas heater 4 may be integrated. In the raw material gas 4 or the integrated heater constituted by the raw material vaporizer 2 and the raw material gas heater 4, the gas must be heated quickly and sufficiently. This is because if the heating is insufficient and the heater fails to sufficiently serve as a heater, zinc vapor will be liquefied or solidified midway to the nozzle 4 or inside the reactor 6 after it is blown thereinto, to cause clogging of the system, so that the system cannot be operated safely or zinc oxide of a desired quality cannot be obtained. Even if clogging of the system does not occur, it is highly possible that the obtained zinc oxide will contain unreacted zinc to give a grayish product.

To obtain ultrafine particles having an average particle diameter of 15 nm to 55 nm reduced from the specific surface area as measured by the BET-one point method, the temperature of the gas containing zinc vapor at the nozzle 4A must be 950°C or more and, preferably 1,000°C or more. If the temperature is below 950°C, the oxidation occurs insufficiently and a longer residence time will be necessary in order to effect sufficient oxidation, with the result that fine particles tend to grow or collision and fusion of fine particles with each other tends to occur. As a result, the desired fine particles of zinc oxide are difficult to obtain. On the other hand, the higher the temperature is, the more quickly and completely the oxidation will proceed so that uniformity and dispersibility of the product are improved. Therefore, heaters made of glass or ceramic are suitable for realizing sufficient heating. Particularly, it is preferred to use a heater made of silicon carbide ceramic. This is because silicon carbide ceramics are particularly high in coefficient of thermal conductivity among various materials resistant to heat, silicon carbide is dark gray in color and hence has high absorptivity and high emissivity and so on so that heat can be supplied to the gas with ease. As described above, higher temperatures of the gas containing zinc vapor at the nozzle 4A are preferred. However, it is practically 1,150°C or less as the heat resistant material which constitutes the raw material gas heater 4 is limited with respect to heat resistance and coefficient of thermal conductivity. Of course, improvement in the thermal resistance of the conducting material which constitutes the raw material heater 4 will enable use of temperatures higher than the above-described temperature.

Furthermore, filling thermally-conducting media into the heater 4 can promote conduction of heat to the raw material gas more efficiently. As the thermal-conducting media, heat resistant materials such as ceramics and glass, particularly quartz, and silicon carbide ceramic are preferred. In view of the efficiency of heat conduction, it is preferred that thermal-conducting media be in the shape of a ring, a mesh ring, a honeycomb, a Raschig ring or the like. The filling amount of thermal-conducting media may be as much as possible unless the heater will not be damaged due to thermal expansion of the media.

The diameter (inner diameter) and length of the heater are determined such that the temperature of the raw material gas at the nozzle of the raw material gas heater 4 is 950°C or more, preferably 1,000°C or more. Use of silicon carbide ceramics can considerably reduce the size of the heater 4 as compared with the use of alumina tubes and realize heating as high as about 1,200°C.

The gas containing zinc vapor thus heated is then introduced into the reactor 6. On the other hand, the oxidizing gas which oxidizes zinc is heated by the oxidizing gas heater 5 and introduced into the reactor 6. The structure of the oxidizing gas heater 5 is not particularly limited as far as it allows sufficient heating but it is preferred that the heater 5 be of the same structure as the raw material gas heater 4.

The oxidizing gas must be at a temperature of 900°C or more, preferably 1,000°C or more at the nozzle 5A of the oxidizing gas heater 5. This is because, if the temperature of it is lower than 900°C, the oxidizing gas will cool the raw material upon contact, resulting in liquefaction or solidification of zinc vapor as the raw material. Thus, it is preferred that the temperature of the oxidizing gas be elevated depending on the temperature of the gas containing zinc vapor as the raw material gas.

The use amount of the oxidizing gas is 1.2 times to 150 times, preferably 50 times to 100 times, than the theoretical amount required for the oxidation of zinc vapor. The oxidizing gas must be comprised of 10% by volume to 100% by volume of oxygen and 0% by volume to 90% by volume of steam provided that the sum of oxygen and steam is 10% by volume to 100% by volume. Steam is added because the addition of steam to the oxidizing gas is found to be effective to considerably accelerate the oxidation by the oxidizing gas.

When the raw material gas and oxidizing gas are in the above temperature range, the oxidation will proceed quickly no matter what manner in which they are blown, such as a coaxial parallel flow, an oblique flow or a cross flow. The nozzles 4A and 5A are preferably coaxial parallel flow nozzles, respectively. As the coaxial parallel flow nozzle, use is made of a double wall pipe or a triple wall pipe. The size of the reactor 6 and blowing rates of the raw material gas and of the oxidizing gas are determined such that the retention time of the gas expressed in normal temperature and pressure in the reaction part is 0.1 second or less, preferably 0.05 second or less. Here, the retention time expressed in normal temperature and pressure is calculated from the flow rate of the gas which passes through the reactor 6 after the blowing and the volume of the reactor 6.

The reactor 6 may be of any shape but a cylindrical one is advantageous from the viewpoint of, for example, preventing the adhesion of scales on the inside thereof. The material of the reactor 6 is selected taking into consideration the heat resistance thereof upon the oxidation reaction of zinc vapor and its resistance to corrosion by zinc and so on. It is advantageous from the viewpoints of cost and maintenance to use a cylindrical pipe made of a stainless-steel equipped with a water cooling jacket or the like apparatus.

The oxidation reaction of zinc vapor proceeds inside the reactor 6 and it is necessary to rapidly cool the reaction gas mixture at a predetermined site in order to control the retention time so that aggregation growth and/or collision of fine particles are suppressed. More particularly, there is taken a measure of introducing a gas for cooling the reaction gas mixture immediately after the outlet 6A of the reactor 6 or some other means suitable for this purpose. As the cooling gas, air, nitrogen, etc. can be used. The cooling gas is blown so that the average gas temperature immediately after the outlet 6A of the reactor 6 is 100°C to 450°C.

The temperature of 450°C or less is the temperature at which it was confirmed that no temperature-dependent aggregation growth, of fine particles of zinc oxide generated in the reactor 6, occurred. Accordingly, lower temperatures are better for rapid cooling. However, the above temperature range is preferred because a large amount of cooling gas is needed when the temperature is low and for the purpose of preventing dropwise condensation of moisture in the gas. The zinc oxide thus obtained is collected by a product collector 8 such as a bag filter. Adjusting the temperature of gas to be blown and the retention time in the reactor can control the reduced average particle diameter of zinc oxide. Higher temperatures of the gas to be blown and/or shorter retention time results in smaller average particle diameter of zinc oxide.

By the production conditions and the arrangement of apparatus as described above, fine particulates of highly white zinc oxide having an average particle diameter of 15 nm to 55 nm as measured by the BET-one point method and that have an L value of 90 or more as measured by a Hunter-type color-difference meter, preferably the one having a tetrapod- or needle-shaped particle configuration, can be obtained.

### EXAMPLES

Hereinafter, the present invention will be described in detail by examples and comparative examples. However, the present invention should not be construed as being limited to the examples.

### Example 1

Two (2) kg/hr of metallic zinc and 8 Nm³/hr (N means normal temperature and pressure, i.e., 25°C, 760 mmHg, hereinafter the same) of nitrogen gas heated to 900°C were simultaneously fed to a raw material vaporizer. The gas containing zinc vapor from the raw material vaporizer was introduced into a heater made of a dense silicon carbide ceramic having a density of 3.1 g/cm³ and a SiC purity of 99.8%. The heater was of an external heating type and was filled with silicon carbide ceramic blocks of the same material as the heater. The retention time of gas in the heater was 7 seconds (calculation was made assuming that the gas was at normal temperature and pressure as stated above). The temperature of the gas obtained here was 1,000°C at the nozzle in the reactor. On the other hand, a total 25 Nm³/Hr of 5% by volume of steam and 95% by volume of oxygen was heated in the heater of an external heating type. The heater was made of a dense silicon carbide ceramic having a density of 3.1 g/cm³ and a SiC purity of 99.8%. Also, in the heater, silicon carbide ceramic blocks of the same material as the raw material gas heater were filled. Thus, the temperature of the gas at the nozzle in the reactor was 1,030°C. The manner in which the both gases were jetted was a coaxial parallel flow. The average retention time of gas in the reactor was 0.02 second and the gas temperature was adjusted to be 300°C or less by blowing air at room temperature immediately after the outlet of the reactor. Thereafter, zinc oxide collected in a bag filter was in the form of tetrapod-shaped ultrafine particulates of highly white zinc oxide containing needle-shaped zinc oxide, having an L value of 96 and a reduced average particle diameter of 24 nm by the specific surface area as measured by the BET-one point method.

### Example 2

Two (2) kg/hr of metallic zinc and 8 Nm³/hr of nitrogen gas heated to 900°C were simultaneously fed to a raw material vaporizer. The gas containing zinc vapor outgoing from the raw material vaporizer was introduced into a heater made of a dense silicon carbide ceramic having a density of 3.1 g/cm³ and a SiC purity of 99.8%. The heater was of an external heating type and it was filled with silicon carbide ceramic blocks of the same material as the heater. The retention time of gas in the heater was 7 seconds (calculation was made assuming that the gas was at normal temperature and pressure as stated above). The temperature of the gas obtained here was 1,000°C at the nozzle in the reactor. On the other hand, a total of 25 Nm³/Hr of 5% by volume of steam and 95% by volume of oxygen was heated in the heater of an external heating type. The heater was made of a dense silicon carbide ceramic having a density of 3.1 g/cm³ and a SiC purity of 99.8%. Also in the heater, the silicon carbide ceramic blocks of the same material as the raw material gas heater were filled. Thus, the temperature of the gas at the nozzle in the reactor was 1,030°C. The manner in which the both gases were jetted was a coaxial parallel flow. The average retention time of the gas in the reactor was 0.008 second and the gas temperature was adjusted to be 300°C or less by blowing air at room temperature immediately after the outlet of the reactor. Thereafter, zinc oxide collected in a bag filter was in the form of tetrapod-shaped ultrafine particulates of highly white zinc oxide containing needle-shaped zinc oxide, having an L value of 95 and a reduced average particle diameter of 17 nm by the specific surface area as measured by the BET-one point method.

### Example 3

Five (5) kg/hr of metallic zinc and 14 Nm³/hr of nitrogen gas heated at 900°C were simultaneously fed to a raw material vaporizer. The gas containing zinc vapor outgoing from the raw material vaporizer was introduced into a heater made of a dense silicon carbide ceramic having a density of 3.1 g/cm³ and a SiC purity of 99.8%. The heater was of an external heating type and filled with silicon carbide ceramic blocks of the same material as the heater. The retention time of gas in the heater was 5 seconds (calculation was made assuming that the gas was at normal temperature and pressure as stated above). The temperature of the gas obtained here was 960°C at the nozzle in the reactor. On the other hand, a total 33 Nm³/Hr of 4% by volume of steam and 96% by volume of oxygen was heated in the heater of an external heating type. The heater was made of a dense silicon carbide ceramic having a density of 3.1 g/cm³ and a SiC purity of 99.8%. Also in the heater, the silicon carbide ceramic blocks of the same material as the raw material gas heater were filled. Thus, the temperature of the gas at the nozzle in the reactor was 980°C. The manner in which the both gases were jetted was a coaxial parallel flow. The average retention time of gas in the reactor was 0.02 second and the gas temperature was adjusted to be 300°C or less by blowing air at room temperature immediately after the outlet of the reactor. Thereafter, zinc oxide collected in a bag filter was in the form of tetrapod-shaped ultrafine particulates of highly white zinc oxide containing needle-shaped zinc oxide, having an L value of 94 as measured by a Hunter-type color-difference meter and a reduced average particle diameter of 40 nm as measured by the BET-one point method.

### Comparative Example 1

Two (2) kg/hr of metallic zinc and 8 Nm³/hr of nitrogen gas heated at 900°C were simultaneously fed to a raw material vaporizer. The gas containing zinc vapor outgoing from the raw material vaporizer was directly spouted into a reactor, but the gas temperature at the nozzle of the vaporizer was 800°C. On the other hand, 25 Nm³/hr of oxygen gas was heated in a heater of an external heating type. The heater was made of quartz and filled with quartz blocks. The temperature of heated gas was 990°C at the nozzle in the reactor. The manner in which the both gases were jetted was a coaxial parallel flow. The average retention time of gas in the reactor was 3 seconds and the gas temperature was adjusted to be 300°C or less by blowing air at room temperature immediately after the outlet of the reactor. Thereafter, zinc oxide collected in a bag filter was in the form of fine particulates of zinc oxide having an L value of 95 and a reduced average particle diameter of 135 nm by the specific surface area as measured by the BET-one point method.

### Comparative Example 2

Two (2) kg/hr of metallic zinc and 8 Nm³/hr of nitrogen gas heated at 900°C were simultaneously fed to a raw material vaporizer. The gas outgoing from the vaporizer was directly jetted into a reactor, but the gas temperature at the nozzle was 800°C. On the other hand, 25 Nm³/hr of oxygen gas was heated in a heater of an external heating type. The heater was made of quartz and filled with quartz blocks. The temperature of heated gas was 990°C at the nozzle in the reactor. The manner in which the both gases were jetted was coaxial parallel flow. The average retention time of gas in the reactor was 2.1 seconds and the gas temperature was adjusted to be 300°C or less by blowing air at room temperature immediately after the outlet of the reactor. Thereafter, zinc oxide collected in a bag filter was in the form of fine particulates of zinc oxide having an L value of 87 as measured by a Hunter-type color-difference meter and a reduced average particle diameter of 90 nm as measured by the BET-one point method.

### Comparative Example 3

Five (5) kg/hr of metallic zinc and 14 Nm³/hr of nitrogen gas heated at 900°C were simultaneously fed to a raw material vaporizer. The gas outgoing from the vaporizer was directly jetted into a reactor, but the gas temperature at the nozzle was 750°C. On the other hand, 33 Nm³/hr of oxygen gas was heated in a heater of an external heating type. The heater was made of quartz and filled with quartz blocks. The temperature of heated gas was 980°C at the nozzle in the reactor. The manner in which the both gases were jetted was a coaxial parallel flow. The average retention time of gas in the reactor was 1.8 seconds and the gas temperature was adjusted to be 300°C or less by blowing air at room temperature immediately after the outlet of the reactor. Thereafter, zinc oxide collected in a bag filter was in the form of fine particulates of zinc oxide having an L value of 85 and a reduced average particle diameter of 65 nm by the specific surface area as measured by the BET-one point method.

### INDUSTRIAL APPLICABILITY

The zinc oxide of the present invention is high purity fine particulates that have not been subjected to the step of pulverization. Because of its small average particle diameter, the zinc oxide has very high dispersibility in aqueous solutions, resins, etc. and tends to form uniform mixtures. When used in cosmetics, etc., it improves the feeling upon use. Also, because of its high degree of whiteness, adjustment of color can be performed with ease when it is suspended or kneaded with other substances. The present invention provides a production process for such fine particulates of highly white zinc oxide on an industrial scale continuously and with constant quality so that it finds very high practical value in industry.

## Claims

1. Fine particulates of highly white zinc oxide having an average particle diameter of 15 nm to 55 nm calculated from the specific surface area as measured by the BET-one point method and that has an L value of 90 or more as measured by a Hunter-type color-difference meter.

2. The fine particulates of highly white zinc oxide as claimed in claim 1, wherein it has a tetrapod- or needle-shaped particle configuration.

3. A process for producing fine particulates of highly white zinc oxide as claimed in claim 1 or 2, by oxidizing zinc vapor with an oxidizing gas in a reactor, wherein a nozzle of the reactor for discharging a gas containing zinc vapor is at a temperature of 950°C or more and a nozzle of the reactor for discharging the oxidizing gas is at a temperature of 900°C or more.

4. The process for producing fine particulates of highly white zinc oxide as claimed in claim 3, wherein the amount of the oxidizing gas discharged into the reactor is from 1.2 times to 150 times of the theoretical amount of the oxidizing gas required for oxidizing the zinc vapor.

5. The process for producing fine particulates of highly white zinc oxide as claimed in claim 3 or 4, wherein the oxidizing gas discharged into the reactor has a composition composed of 10% by volume to 100% by volume of oxygen and 0% by volume to 90% by volume of steam provided that the sum of oxygen and steam is 10% by volume to 100% by volume.

6. The process for producing fine particulates of highly white zinc oxide as claimed in any one of claims 3 to 5, wherein a residence time of the gas passing the reactor is 0.1 second or less as expressed in normal temperature and pressure.

7. The process for producing fine particulates of highly white zinc oxide as claimed in any one of claims 3 to 6, wherein a cooling gas is blown against an effluent gas immediately after an outlet of the reactor to maintain an average temperature of the effluent gas immediately after the outlet of the reactor at 100°C to 450°C.

8. The process for producing fine particulates of highly white zinc oxide as claimed in any one of claims 3 to 7, wherein a heater is provided downstream of a zinc vaporizer so that the temperature of the gas containing zinc vapor at the nozzle for discharging it is maintained at 950°C or more.

9. The process for producing fine particulates of highly white zinc oxide as claimed in claim 8, wherein the heater and the zinc vaporizer are made of a dense silicon carbide ceramic.

## Patentansprüche

1. Feine Teilchen von hochweißem Zinkoxid mit einem mittleren Teilchendurchmesser von 15 nm bis 55 nm, berechnet von der durch das BET-Einpunktverfahren gemessenen spezifischen Oberfläche, und einem L-Wert von 90 oder mehr, gemessen mit einem Farbunterschied-Messgerät vom Hunter-Typ.

2. Feine Teilchen von hochweißem Zinkoxid nach Anspruch 1, die eine tetrapodförmige oder nadelförmige Teilchenkonfiguration aufweisen.

3. Verfahren zum Herstellen von feinen Teilchen von hochweißem Zinkoxid nach Anspruch 1 oder 2 durch Oxidieren von Zinkdampf mit einem oxidierenden Gas in einem Reaktor, wobei eine Düse des Reaktors zum Entladen eines Zinkdampf enthaltenden Gases eine Temperatur von 950°C oder höher aufweist und eine Düse des Reaktors zum Entladen des oxidierenden Gases eine Temperatur von 900°C oder mehr aufweist.

4. Verfahren zum Herstellen von feinen Teilchen von hochweißem Zinkoxid nach Anspruch 3, wobei die Menge des oxidierenden Gases, das in den Reaktor entladen wird, die 1,2-fache bis 150-fache der für die Oxidation des Zinkdampfes erforderlichen theoretischen Menge des oxidierenden Gases ist.

5. Verfahren zum Herstellen von feinen Teilchen von hochweißem Zinkoxid nach Anspruch 3 oder 4, wobei das in den Reaktor entladene oxidierende Gas eine Zusammensetzung hat, die aus 10 Vol.-% bis 100 Vol.-% Sauerstoff und 0 Vol.-% bis 90 Vol.-% Dampf besteht, mit der Maßgabe, dass die Summe von Sauerstoff und Dampf 10 Vol.-% bis 100 Vol.-% ist.

6. Verfahren zum Herstellen von feinen Teilchen von hochweißem Zinkoxid nach einem der Ansprüche 3 bis 5, wobei die Verweildauer des den Reaktor passierenden Gases 0,1 sec oder weniger ist, ausgedrückt in Normaltemperatur und Normaldruck.

7. Verfahren zum Herstellen von feinen Teilchen von hochweißem Zinkoxid nach einem der Ansprüche 3 bis 6, wobei unmittelbar nach dem Auslass des Reaktors ein Kühlgas gegen ein ausströmendes Gas geblasen wird, um die mittlere Temperatur des ausströmenden Gases unmittelbar nach dem Auslass des Reaktors bei 100°C bis 450°C zu halten.

8. Verfahren zum Herstellen von feinen Teilchen von hochweißem Zinkoxid nach einem der Ansprüche 3 bis 7, wobei ein Heizer stromabwärts eines Zinkdampferzeugers angebracht ist, so dass die Temperatur des den Zinkdampf enthaltenden Gases an der Düse zum Entladen des Gases bei 950°C oder höher gehalten wird.

9. Verfahren zum Herstellen von feinen Teilchen von hochweißem Zinkoxid nach Anspruch 8, wobei der Heizer und der Zinkdampferzeuger aus einer dichten Siliciumcarbidkeramik besteht.

## Revendications

1. Particules fines d'oxyde de zinc très blanc ayant un diamètre de particule moyen de 15 nm à 55 nm calculé à partir de la superficie spécifique, comme mesurée par le procédé en un point BET et ayant une valeur L de 90 ou plus, comme mesurée par le système de mesure de la différence de couleur de type Hunter.

2. Particules fines d'oxyde de zinc très blanc selon la revendication 1, ayant une configuration de particule en forme d'aiguille ou de tétrapode.

3. Processus de production de fines particules d'oxyde de zinc très blanc selon la revendication 1 ou 2, en oxydant la vapeur de zinc avec un gaz oxydant dans un réacteur, dans lequel une buse du réacteur permettant de décharger un gaz contenant de la vapeur de zinc est à une température de 950°C ou plus et une buse du réacteur pour décharger le gaz oxydant est à une température de 900°C ou plus.

4. Processus de production de fines particules d'oxyde de zinc très blanc selon la revendication 3, dans lequel la quantité de gaz oxydant déchargé dans le réacteur est de 1,2 fois à 150 fois la quantité théorique du gaz oxydant nécessaire pour oxyder la vapeur de zinc.

5. Processus de production de fines particules d'oxyde de zinc très blanc selon la revendication 3 ou 4, dans lequel le gaz oxydant déchargé dans le réacteur a une composition constituée de 10 % en volume à 100 % en volume d'oxygène et de 0 % en volume à 90 % en volume de vapeur, à condition que la somme de l'oxygène et de la vapeur soit de 10 % en volume à 100 % en volume.

6. Processus de production de particules fines d'oxyde de zinc très blanc selon l'une quelconque des revendications 3 à 5, dans lequel le temps de séjour du gaz passant dans le réacteur est de 0,1 seconde ou moins, comme exprimé dans des conditions normales de température et de pression.

7. Processus de production de particules fines d'oxyde de zinc très blanc selon l'une quelconque des revendications 3 à 6, dans lequel un gaz de refroidissement est soufflé contre un gaz effluent immédiatement après une sortie du réacteur, afin de maintenir une température moyenne du gaz effluent immédiatement après la sortie du réacteur entre 100°C et 450°C.

8. Processus de production de particules fines d'oxyde de zinc très blanc selon l'une quelconque des revendications 3 à 7, dans lequel un chauffage est fourni en aval d'un vaporisateur de zinc, de sorte que la température du gaz contenant la vapeur de zinc au niveau de la buse de décharge soit maintenue à 950°C ou plus.

9. Processus de production de particules fines d'oxyde de zinc très blanc selon la revendication 8, dans lequel le chauffage et le vaporisateur de zinc sont réalisés en une céramique de carbure de silicium dense.
